Europäisches Patentamt

European Patent Office

Office européen des brevets

(11) Veröffentlichungsnummer: **0 087 543**
**B1**

(12) **EUROPÄISCHE PATENTSCHRIFT**

(45) Veröffentlichungstag der Patentschrift:
19.06.85

(51) Int. Cl.⁴: **F 16 C 3/02**

(21) Anmeldenummer: **82710008.2**

(22) Anmeldetag: **26.02.82**

(54) Hohlwelle aus faserverstärktem Kunststoff.

(43) Veröffentlichungstag der Anmeldung:
07.09.83 Patentblatt 83/36

(45) Bekanntmachung des Hinweises auf die Patenterteilung:
19.06.85 Patentblatt 85/25

(84) Benannte Vertragsstaaten:
DE FR GB IT

(56) Entgegenhaltungen:
EP - A - 0 085 127
DE - A - 2 058 016
DE - A - 2 845 349
DE - A - 3 020 020
US - A - 3 638 455

THE ENGINEER, 24. Juni 1971 London J. MORTIMER
"Making the Most of Carbon Fibre" Seiten 26 bis 29

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Hahn, Michael, Dipl.-Ing., Bahnhofstrasse 15b,
D-8012 Ottobrunn (DE)**
Erfinder: **Brunsch, Klaus, Dipl.-Ing., Asternweg 11,
D-8190 Weidach (DE)**

## Beschreibung

Die Erfindung betrifft eine Hohlwelle gemäß dem Oberbegriff des Patentanspruchs 1 wie z. B. aus den DE-A-2 058 016 vorbekannt.

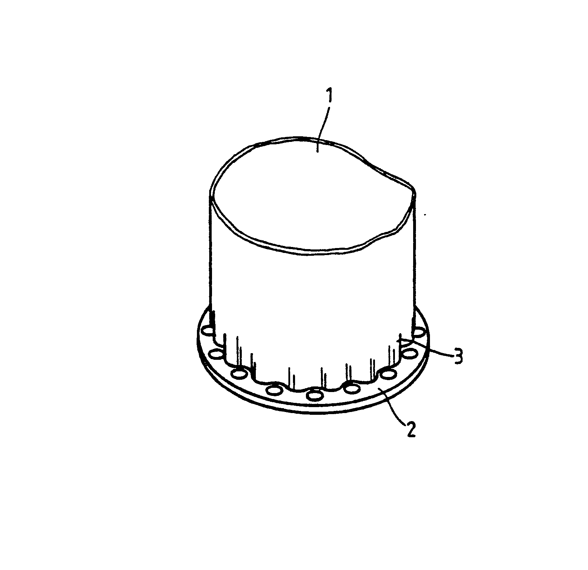

Eine derartige Hohlwelle kommt u. a. aus Gründen des Leichtbaus bei Drehflügelflugzeugen als Grundkörper der Rotornabe in Betracht, beispielsweise der in der nicht vorveröffentlichten EP-A-85 127 beschriebenen Nabenbauart. Bei deren Gestaltung ist allerdings eine ausreichend hohe Festigkeit bzw. Steifigkeit des Überganges zwischen der Hohlwelle und dem Festflansch nicht problemlos erreichbar. So hat die übliche Verdickung der Wandung des betreffenden Wellenendes zu einem Kegelprofil eine unerwünschte Zunahme des Baugewichts zur Folge, wogegen einzelne über den Wellenumfang verteilte, relativ dünnwandige Verstärkungsrippen der durch die DE-A-28 349 (Fig. 5) bekannten Art mit dem Nachteil von zusätzlichen (entsprechend) kleinflächigen Fügestellen minderer Festigkeit behaftet sind.

Der Erfindung liegt daher bei einer Hohlwelle der eingangs genannten Art die Aufgabe zugrunde, die nötige Festigkeit bzw. Steifigkeit des Überganges Hohlwelle/Festflansch ohne Verdickung der Wellenwandung bzw. entsprechenden Materialauftrag sicherzustellen.

Diese Aufgabe ist gemäß dem Kennzeichen des Patentanspruchs 1 gelöst in der Erkenntnis, daß die Wellform allein die Möglichkeit einer für den Anwendungsfall anzustrebende dreidimensionalen Orientierung des einzelnen Faserstranges schafft, aus Gründen der Fertigungsvereinfachung vorzugsweise für Faserstränge der im Unteranspruch gekennzeichneten Art.

Die Erfindung wird im übrigen nachfolgend anhand eines Ausführungsbeispieles erläutert. Hierzu zeigt die Zeichnung von einem Rotor der in der vorgenannten EP-Patentanmeldung beschriebenen Art bloß den an ein Getriebe kuppelbaren unteren Abschnitt der Rotornabe, die in Form einer rohrkörperartigen Hohlwelle 1 aus faserverstärkten Kunststoff mit einem ringförmigen Festflansch 2 versehen ist. Aus Festigkeitsgründen ist der Festflansch 2 mit der Wellenwandung zu einem fugenlosen Ganzen vereinigt. Hierzu ist durch die Verwendung von sogenannten unidirektionalen Prepregs für den Faseraufbau ohne weiteres erreichbar, daß sich sämtliche über die Wellenlänge erstreckenden Faserstränge in den Festflansch 2 fortsetzen. Dabei können zur Versteifung zwischen Faserlagen mit in Wellenlängsrichtung orientierten Fasersträngen auch Faserlagen mit demgegenüber unter einem Winkel (z. B. von 45°) sich erstreckenden Fasersträngen eingefügt sein.

Die nötige Festigkeit bzw. Steifigkeit im Übergang von der Hohlwelle 1 zum Festflansch 2 ist durch ein gewelltes Profil 3 der Wellenwandung am betreffenden Wellenende erreicht, demzufolge die vorgenannten Faserstränge zwischen der Hohlwelle 1 und dem Festflansch 2 eine bezüglich der Faserbeanspruchung bzw. -belastbarkeit in diesem Übergangsbereich bestmögliche Orientierung erhalten. Das dargestellte Profil 3 läßt sich unter Verwendung eines entsprechend geformten Positivkerns (für die Hohlwelle 1 und den Festflansch 2) durch Handlaminieren der vorgenannten Prepregs ohne Schwierigkeiten realisieren, sofern, je nach Dicke der Wellenwandung, mehrmals während des Laminierens das auf dem Positivkern jeweils aufgelegte Prepregmaterial zwischengepreßt wird.

## Patentansprüche

1. Hohlwellen aus faserverstärktem Kunststoff mit einem ringförmigen Festflansch, dadurch gekennzeichnet, daß die Wellenwandung am flanschseitigen Wellenende ein in Umfangsrichtung gewelltes Profil (3) aufweist.

2. Hohlwelle nach Anspruch 1, dadurch gekennzeichnet, daß der Festflansch (2) mit der Wellenwandung zu einem Faseraufbau aus über die Wellenlänge in den Festflansch sich fortsetzenden, in der einzelnen Faserlage unidirektionalen Fasersträngen vereinigt ist.

## Claims

1. A hollow shaft made of fibre-reinforced plastics material having a fixed annular flange, characterised in that the shaft walling has, at the flange-side end of the shaft, a profile (3) which is corrugated in the circumferential direction.

2. A hollow shaft according to claim 1, characterised in that the fixed flange (2) is combined with the shaft walling to form a fibre structure consisting of fibre strands which continue over the length of the shaft into the fixed flange and which are unidirectional in the individual fibre layers.

## Revendications

1. Arbre creux en matière plastique renforcée de fibres avec une collerette annulaire rigide caractérisé par le fait que la paroi de l'arbre présente à son extrémité côté collerette un profil (3) ondulé en direction périphérique.

2. Arbre creux selon la revendication 1 caractérisé par le fait que la collerette rigide (2) est réunie à la paroi de l'arbre en une structure fibreuse de cordons de fibres unidirectionnels dans chaque couche de fibres, lesdits cordons se poursuivant, sur la longueur de l'arbre, dans la collerette rigide.